# EUROPEAN PATENT APPLICATION

(11) **EP 4 596 401 A1**
(43) Date of publication of application: **06.08.2025**
(21) Application number: 23891646.4
(22) Date of filing: 16.11.2023
(51) Int. Cl.: B64D 1/22, B64C 27/08, B64C 39/02, B64D 17/80, B64U 70/50, B64U 70/93

(54) **RECOVERY SYSTEM AND RECOVERY METHOD**

(30) Priority: 17.11.2022 JP 2022184229
(71) Applicant: Mitsubishi Heavy Industries, Ltd., Tokyo 100-8332 (JP)
(72) Inventor: SATO, Akihiro, Tokyo 100-8332 (JP)
(74) Representative: Hoffmann Eitle
(86) International application number: PCT/JP2023/041234
(87) International publication number: WO 2024/106499

(57) **Abstract**

The present invention is a recovery system for recovering a spacecraft that drops a fuselage while generating thrust when landing. The recovery system includes: a plurality of cable members connected to the fuselage and extending toward the outside of the fuselage at the time of fuselage dropping; a plurality of unmanned aircraft that respectively seize the cable members and fly; and a recovery structure that is provided at a landing location of the spacecraft, and that supports the spacecraft in a suspended state as a result of the seized/released plurality of cable members being latched to the unmanned aircraft. At the time of fuselage dropping, the recovery system executes: a step in which the plurality of unmanned aircraft latch the seized plurality of cable members to the recovery structure; a step in which the plurality of unmanned aircraft releases the seizing of the cable members; and a step in which, after thrust stoppage of the spacecraft, the recovery structure suspends and supports the spacecraft.

## Description

### Technical Field

The present disclosure relates to a recovery system and a recovery method.

### Background Art

In the related art, as a recovery system, a method of catching a launch vehicle that is separated and descends in mid-air using a helicopter, and transporting the launch vehicle is known (for example, refer to PTL 1).

### Citation List

### Patent Literature

[PTL 1] US Unexamined Patent Application Publication No. 2006/0049316

### Summary of Invention

### Technical Problem

The launch vehicle recovery method, such as in PTL 1, is a highly difficult operation using a helicopter. As another recovery method, there is a method in which a separated launch vehicle generates thrust during landing while controlling a position and an attitude to descend a craft thereof and deploys legs from the rear of the craft to land vertically. However, providing legs and deployment mechanisms for launch vehicle landing results in an increase in weight, which reduces capabilities of the launch vehicle. **In** addition, since a descent velocity of the launch vehicle decreases near landing, attitude control or the like becomes difficult, making safe landing difficult.

**In** this regard, an object of the present disclosure is to provide a recovery system and a recovery method capable of performing safe landing while suppressing a decrease in capabilities of a launch vehicle.

### Solution to Problem

According to the present disclosure, there is provided a recovery system that recovers a spacecraft whose craft descends while thrust is generated during landing, the recovery system including: a plurality of cable-like members connected to the craft and extending toward an outer side of the craft during craft descent; a plurality of unmanned aerial vehicles respectively capturing the cable-like members while flying; and a recovery structure into which the plurality of captured cable-like members are latched and released by the unmanned aerial vehicles, thereby supporting the spacecraft in a suspended state, the recovery structure being provided at a landing point of the spacecraft, in which the steps are executed: a step of latching the plurality of captured cable-like members into the recovery structure during the craft descent, using the plurality of unmanned aerial vehicles; a step of releasing the cable-like members from capture, using the plurality of unmanned aerial vehicles; and a step of suspending and supporting the spacecraft after the thrust of the spacecraft is stopped, using the recovery structure.

According to the present disclosure, there is provided a recovery method executed by a recovery system that recovers a spacecraft whose craft descends while thrust is generated during landing, the recovery system including a plurality of cable-like members connected to the craft and extending toward an outer side of the craft during craft descent, a plurality of unmanned aerial vehicles respectively capturing the cable-like members while flying, and a recovery structure into which the plurality of captured cable-like members are latched and released by the unmanned aerial vehicles, thereby supporting the spacecraft in a suspended state, the recovery structure being provided at a landing point of the spacecraft, the recovery method including: a step of latching the plurality of captured cable-like members into the recovery structure during the craft descent, using the plurality of unmanned aerial vehicles; a step of releasing the cable-like members from capture, using the plurality of unmanned aerial vehicles; and a step of suspending and supporting the spacecraft after the thrust of the spacecraft is stopped, using the recovery structure.

### Advantageous Effects of Invention

According to the present disclosure, it is possible to perform safe landing while suppressing a decrease in capabilities of a launch vehicle.

### Brief Description of Drawings

Fig. 1 is a schematic configuration view showing an example of a recovery system according to Embodiment 1.
Fig. 2 is a block diagram of the recovery system according to Embodiment 1.
Fig. 3 is a schematic view schematically illustrating a periphery of a wire provided in a launch vehicle.
Fig. 4 is a schematic view schematically illustrating a recovery structure.
Fig. 5 is a schematic view schematically illustrating a wire trap.
Fig. 6 is an explanatory view regarding an operation of the wire trap.
Fig. 7 is a view showing an example of a wire stopper.
Fig. 8 is an explanatory view regarding latching of the wire trap and the wire stopper.
Fig. 9 is an explanatory view regarding a position control between the launch vehicle and a vessel.
Fig. 10 is a flowchart regarding a first position control.
Fig. 11 is a flowchart regarding a second position control.
Fig. 12 is an explanatory view regarding an example of an operation of the recovery system.
Fig. 13 is an explanatory view regarding a group control of unmanned aerial vehicles.
Fig. 14 is an explanatory view regarding an example of an operation of the recovery system.
Fig. 15 is an explanatory view showing the launch vehicle after recovery.
Fig. 16 is an explanatory view regarding an operation of a recovery system according to Embodiment 2.

### Description of Embodiments

Embodiments according to the present disclosure will be described in detail below with reference to the drawings. Note that this disclosure is not limited to the embodiment. In addition, components in the following embodiment include those that can be easily replaced by those skilled in the art or those that are substantially the same. Further, the components described below can be combined as appropriate, and in a case where there are a plurality of embodiments, the embodiments can also be combined.

### [Embodiment 1]

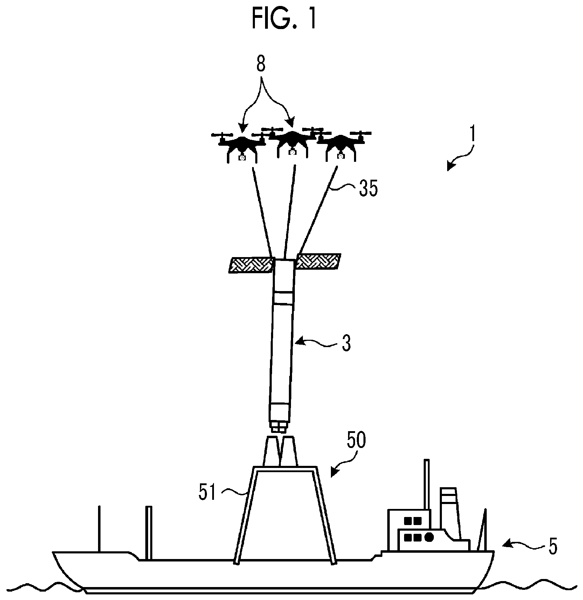

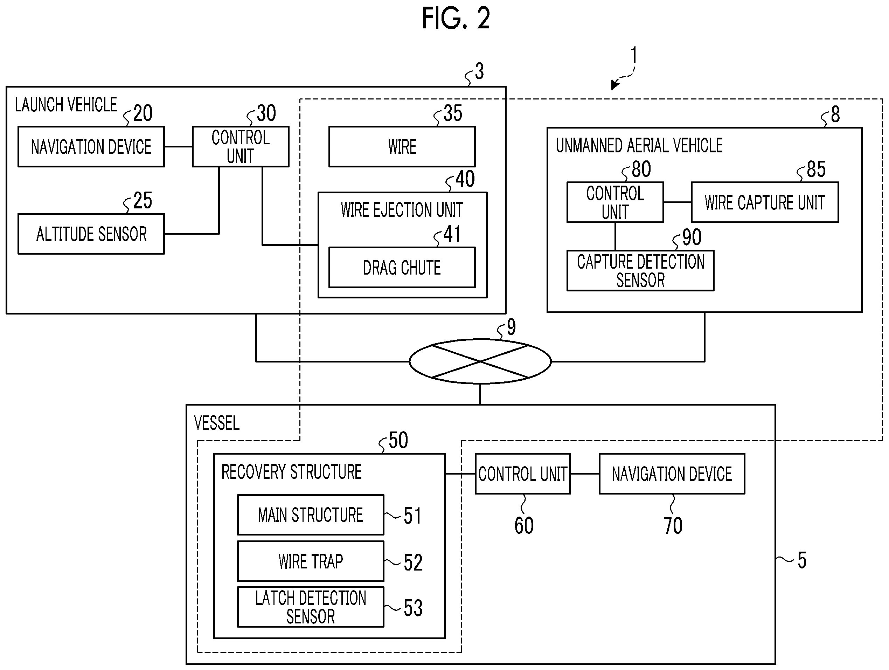

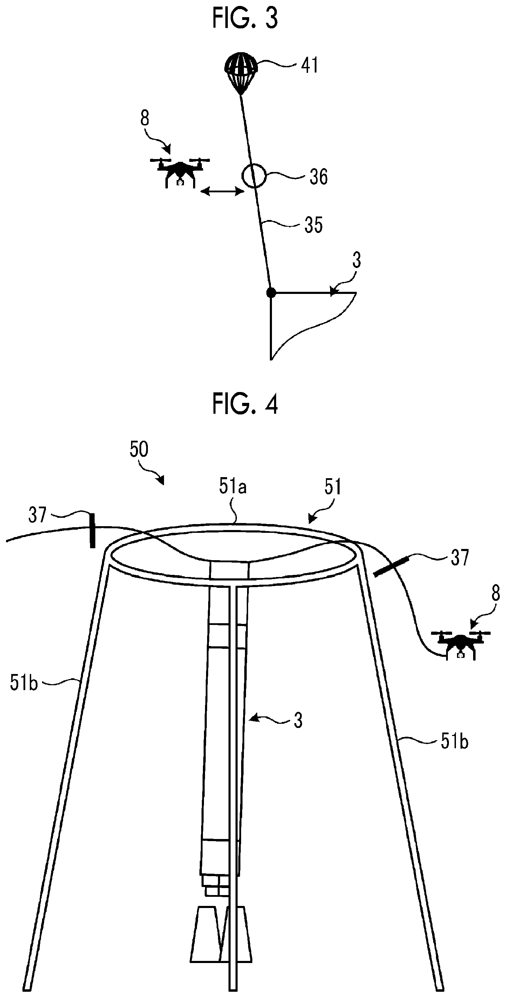

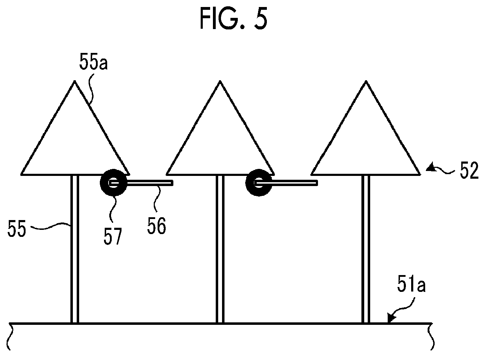

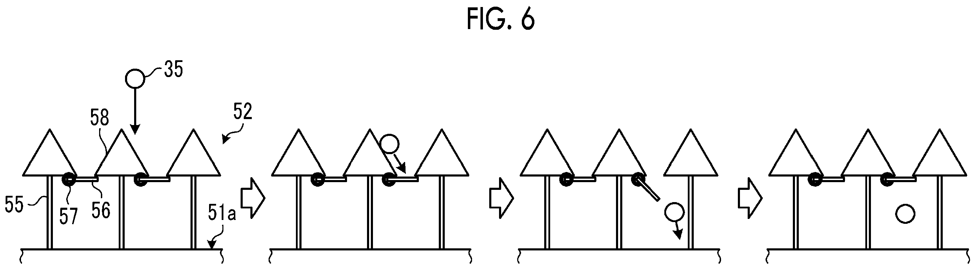

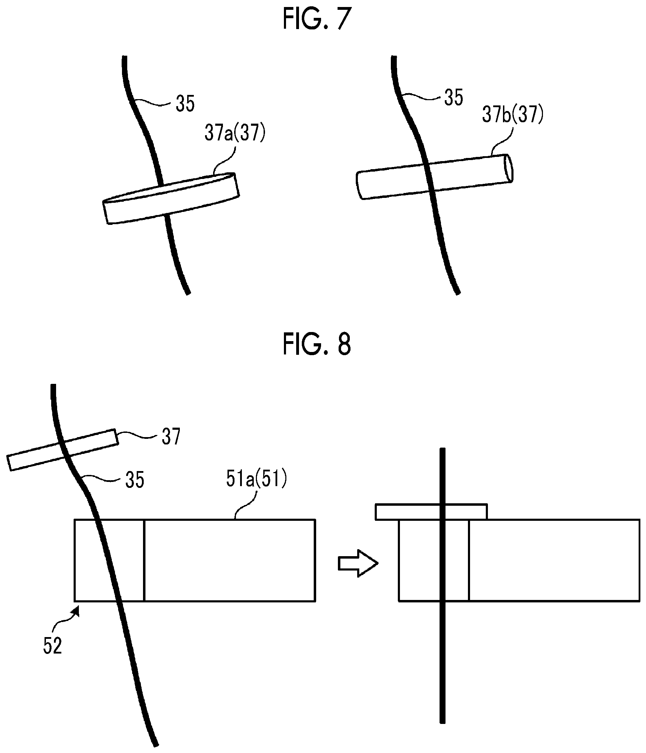

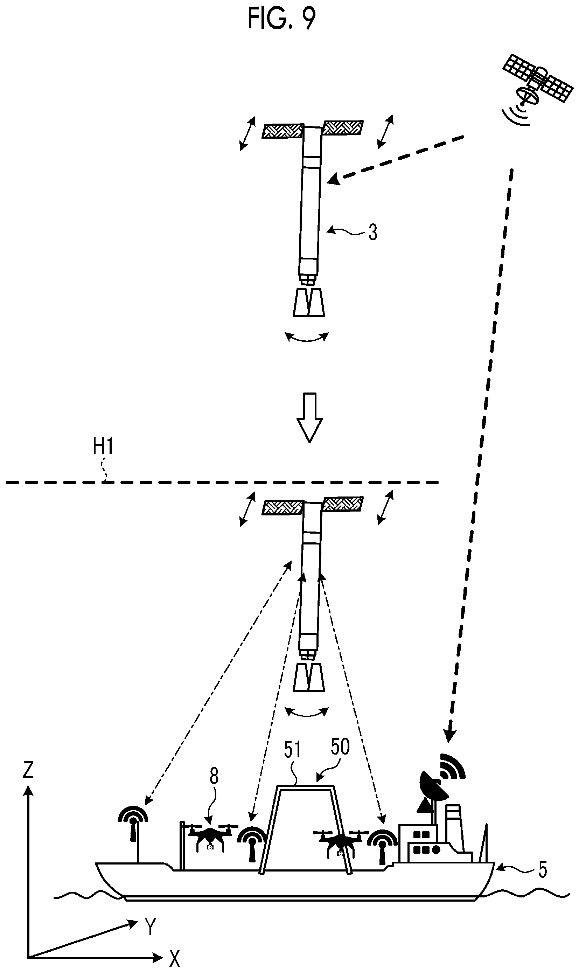

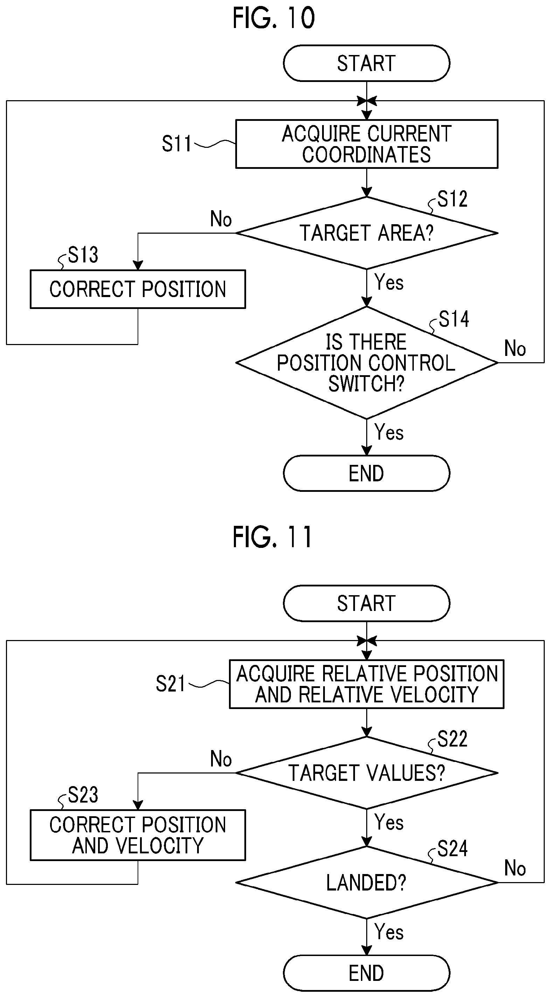

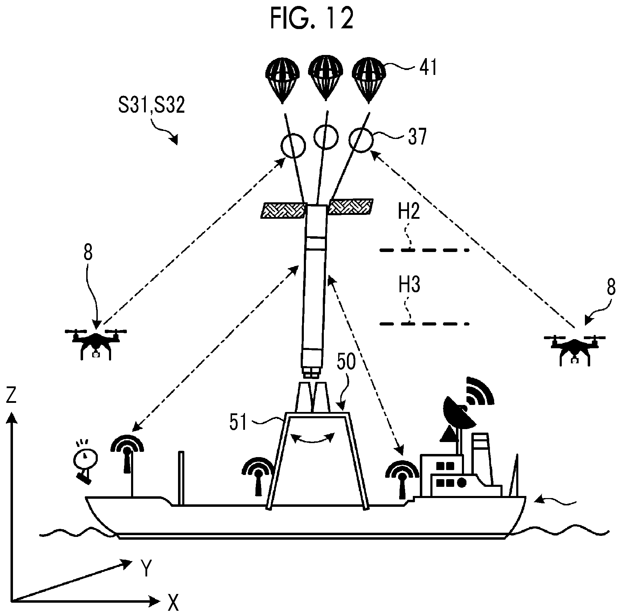

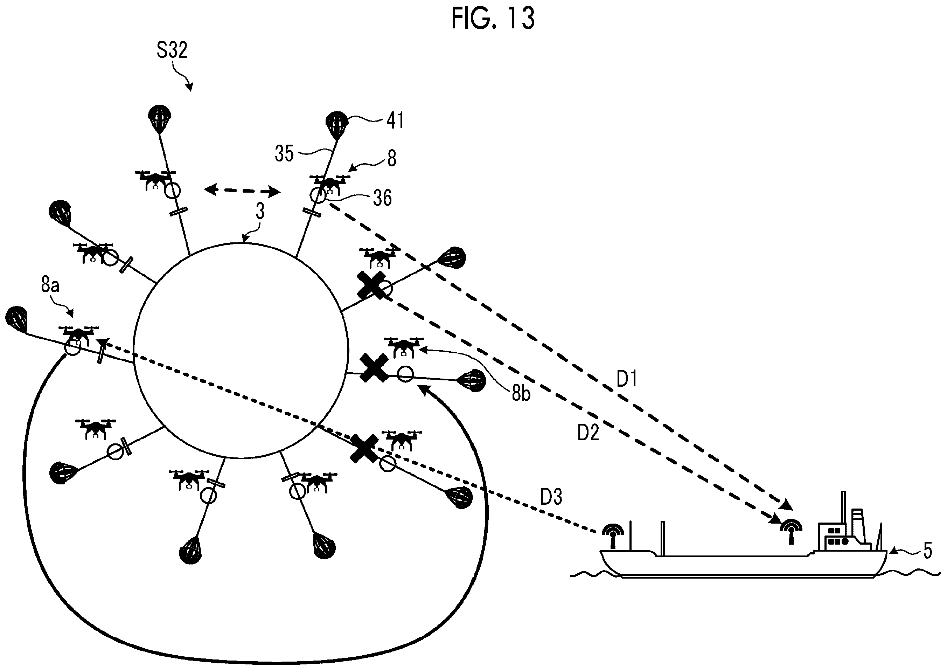

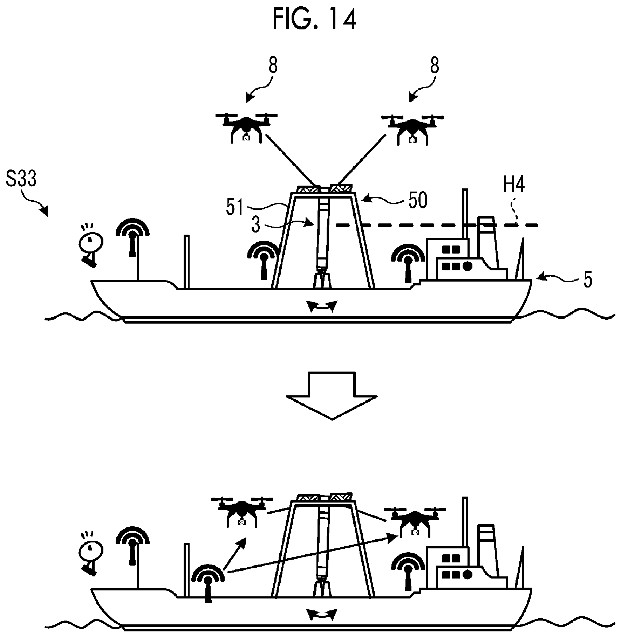

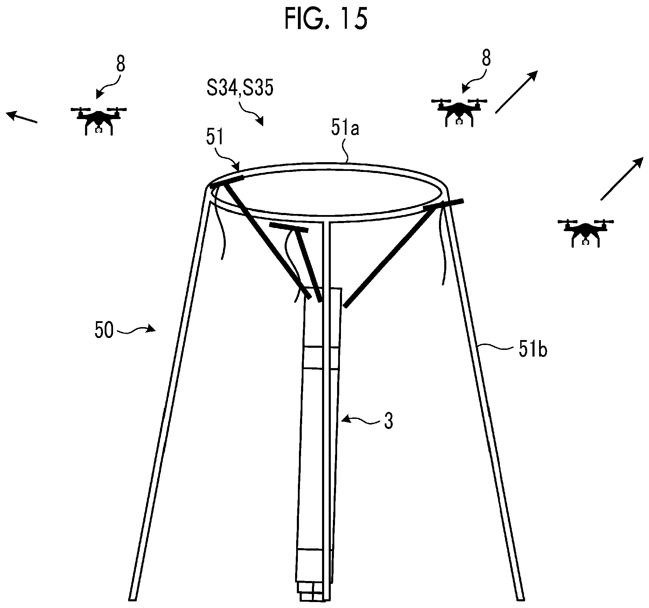

Fig. 1 is a schematic configuration view showing an example of a recovery system according to Embodiment 1. Fig. 2 is a block diagram of the recovery system according to Embodiment 1. Fig. 3 is a schematic view schematically illustrating a periphery of a wire provided in a launch vehicle. Fig. 4 is a schematic view schematically illustrating a recovery structure. Fig. 5 is a schematic view schematically illustrating a wire trap. Fig. 6 is an explanatory view regarding an operation of the wire trap. Fig. 7 is a view showing an example of a wire stopper. Fig. 8 is an explanatory view regarding latching of the wire trap and the wire stopper. Fig. 9 is an explanatory view regarding a position control between the launch vehicle and a vessel. Fig. 10 is a flowchart regarding a first position control. Fig. 11 is a flowchart regarding a second position control. Fig. 12 is an explanatory view regarding an example of an operation of the recovery system. Fig. 13 is an explanatory view regarding a group control of unmanned aerial vehicles. Fig. 14 is an explanatory view regarding an example of an operation of the recovery system. Fig. 15 is an explanatory view showing the launch vehicle after recovery.

### (Recovery System)

A recovery system 1 of Embodiment 1 is a system that recovers a spacecraft such as a launch vehicle. Here, the spacecraft reduces a descent velocity while generating thrust from the rear of the craft during craft descent for landing. In Embodiment 1, the spacecraft will be described as being applied to a first stage launch vehicle after separation.

As shown in Figs. 1 and 2, in the recovery system 1 according to Embodiment 1, an unmanned aerial vehicle 8 is used to recover a launch vehicle 3 in craft descent in a suspended state on the recovery structure 50 provided on a vessel 5. The recovery system 1 is mounted across the launch vehicle 3 and the vessel 5 and includes the unmanned aerial vehicle 8. Additionally, in the recovery system 1, the launch vehicle 3, the vessel 5, and the unmanned aerial vehicle 8 can perform bidirectional communication via a communication network 9 such as wireless communication.

As shown in Fig. 2, the launch vehicle 3 includes a navigation device 20, an altitude sensor 25, a control unit 30, a wire (cable-like member) 35, and a wire ejection unit 40. In addition, the vessel 5 includes the recovery structure 50, a control unit 60, and a navigation device 70. The recovery system 1 includes the wire 35 and the wire ejection unit 40 in the launch vehicle 3, the recovery structure 50 on the vessel 5, and the unmanned aerial vehicle 8.

### (Launch vehicle)

As described above, the launch vehicle 3 includes the navigation device 20, the altitude sensor 25, the control unit 30, the wire (cable-like member) 35, and the wire ejection unit 40.

The navigation device 20 is, for example, an inertial navigation system (INS) and acquires attitude angles of the launch vehicle 3 in a roll direction, a yaw direction, and a pitch direction, a craft velocity, an inertial velocity, a craft acceleration, a spacecraft heading, position coordinates in an earth coordinate system, and the like of the launch vehicle 3. In Embodiment 1, the navigation device 20 is described as being applied to the inertial navigation system, but is not particularly limited, and any navigation device 20 may be used. Additionally, in Embodiment 1, the navigation device 20 is configured as an inertial navigation system including a global positioning system (GPS) in order to improve the accuracy of position measurements. In Embodiment 1, the navigation device 20 is described as being applied to the inertial navigation system including GPS; however, the present disclosure is not particularly limited to GPS, and any device capable of accurately measuring positions need only be used. Further, the navigation device 20 may include an attitude angle sensor that detects the attitude angles of the launch vehicle 3, a velocity sensor that detects the craft velocity of the launch vehicle 3, an acceleration sensor that detects the craft acceleration of the launch vehicle 3, and a sensor that detects the spacecraft heading of the launch vehicle 3.

The altitude sensor 25 includes an altitude sensor 25 that detects an altitude of the launch vehicle 3 from a landing surface or a water surface. The altitude sensor 25 is, for example, a laser altimeter and measures a relative altitude from the launch vehicle 3 to a landing point. As the altitude sensor 25, a radio altimeter, a barometric altimeter, or any altimeter may be used. The altitude sensor 25 outputs the detected relative altitude of the launch vehicle 3 to the control unit 30.

The control unit 30 includes, for example, an integrated circuit such as a central processing unit (CPU). The control unit 30 controls the attitude and thrust of the launch vehicle 3 during the craft descent or executes the ejection of the wire 35, which will be described below, during the craft descent of the launch vehicle 3.

The wire 35 is captured by the unmanned aerial vehicle 8 during the craft descent of the launch vehicle 3. As shown in Fig. 3, one end of the wire 35 is connected to a hard point provided on an upper portion of the launch vehicle 3. In addition, as shown in Fig. 13, a plurality of (for example, 10) wires 35 are provided at the hard point and are provided at predetermined intervals along the periphery of the fuselage of the launch vehicle 3. Further, the wire 35 is provided with a captured structural member 36 that is to be captured by the unmanned aerial vehicle 8. The captured structural member 36 has, for example, a ring shape. The shape of the captured structural member 36 is not particularly limited and may be any shape as long as it can be captured by the unmanned aerial vehicle 8. Additionally, as shown in Figs. 4 and 7, the wire 35 is provided with a latch member 37 that latches onto a wire trap 52, which will be described below. As shown in Fig. 7, the latch member 37 may be a disc-shaped latch member 37a centered on a longitudinal direction of the wire 35 or may be a shaft-shaped latch member 37b provided orthogonal to the longitudinal direction of the wire 35.

The wire ejection unit 40 ejects the wire 35 during the craft descent of the launch vehicle 3. The wire ejection unit 40 includes a drag chute 41. The drag chute 41 is connected to the other end of the wire 35 and provides aerodynamic drag to apply tension to the wire 35 during the craft descent of the launch vehicle 3. The wire ejection unit 40 is connected to the control unit 30, and the control unit 30 controls the wire ejection unit 40 to deploy the drag chute 41 at a predetermined timing. In Embodiment 1, the drag chute 41 is provided, but instead of the drag chute 41, a parachute or a balloon may be provided.

### (Vessel)

As described above, the vessel 5 includes the recovery structure 50, the control unit 60, and the navigation device 70.

The navigation device 70 is, for example, an inertial navigation system (INS) and acquires attitude angles in a pitch direction and a roll direction, a vessel heading, a velocity, an acceleration, position coordinates in the earth coordinate system, and the like of the vessel 5. In Embodiment 1, the navigation device 70 is described as being applied to the inertial navigation system, but is not particularly limited, and any navigation device 70 may be used. Additionally, in Embodiment 1, the navigation device 70 is configured as an inertial navigation system including a global positioning system (GPS) in order to improve the accuracy of position measurements. In Embodiment 1, the navigation device 70 is described as being applied to the inertial navigation system including GPS; however, the present disclosure is not particularly limited to GPS, and any device capable of accurately measuring positions need only be used.

The control unit 60 includes, for example, an integrated circuit such as a central processing unit (CPU). The control unit 60 moves the vessel 5 to a predetermined position or performs information communication with the unmanned aerial vehicle 8 based on input data.

The recovery structure 50 is provided on the vessel 5, and the launch vehicle 3 lands on the recovery structure 50 as the landing point. In Embodiment 1, the recovery structure 50 is provided on the vessel 5 but may also be provided on land or an offshore facility, and the present disclosure is not particularly limited as long as it serves as the recovery location of the launch vehicle 3. The recovery structure 50 includes a main structure 51, the wire trap 52, and a latch detection sensor 53.

As shown in Figs. 1 and 4, the main structure 51 is provided as standing on the vessel 5 and has a height that allows the launch vehicle 3 to be suspended. Specifically, the main structure 51 includes an annular portion 51a provided at an upper portion in the vertical direction and a plurality of fixed legs 51b extending downward from the annular portion 51a in the vertical direction and fixed to the vessel 5. The annular portion 51a includes a central space with a diameter larger than that of the fuselage of the launch vehicle 3 and is sized to allow the launch vehicle 3 in craft descent to be accommodated. The plurality of fixed legs 51b are disposed at predetermined intervals in a circumferential direction of the annular portion 51a.

As shown in Fig. 5, the wire traps 52 are provided on the annular portion 51a of the main structure 51 and are arranged in the circumferential direction. The wire trap 52 includes a trap body 55, a movable door 56, and a spring-loaded hinge 57. The trap body 55 extends upward in the vertical direction, with a lower base end side thereof connected to the annular portion 51a, and a guide part 55a formed on an upper tip side. The trap body 55 forms an accommodation space for accommodating the wire 35 between the trap body 55 and an adjacent trap body 55. The accommodation space is sized to allow the wire 35 to be accommodated and is sized to allow the latch member 37 provided on the wire 35 to latch. The guide part 55a is formed in a tapered shape that is tapered from the base end side toward the tip side. The guide part 55a guides the wire 35 to the accommodation space formed between the adjacent trap bodies 55 by moving the wire 35, which enters from the tip side, along a surface thereof. Additionally, the base end side of the guide part 55a functions as a stopper that restricts the movable door 56, which will be described below, to a closed position. The movable door 56 opens and closes an opening that is connected to the accommodation space formed between the guide parts 55a. The spring-loaded hinge 57 connects the movable door 56 to the guide part 55a of the trap body 55 to allow the movable door 56 to open and close and biases the movable door 56 toward a closed side. As shown in Fig. 6, the spring-loaded hinge 57 moves the movable door 56 to the opened side to allow the wire 35 to enter through the opening between the guide parts 55a. Meanwhile, the spring-loaded hinge 57 moves the movable door 56 to the closed side to prevent the wire 35 accommodated in the accommodation space from being disengaged. In this case, the movable door 56 is restricted to a closed position by the guide part 55a of the trap body 55.

The latch detection sensor 53 is a sensor that detects the latching of the wire 35 into the recovery structure 50. Here, as shown in Fig. 8, the wire 35 accommodated inside the trap body 55 of the wire trap 52 is pulled downward in the longitudinal direction due to the craft descent of the launch vehicle 3. In this case, the latch member 37 provided on the wire 35 is caught on the trap body 55, thereby latching the wire 35 to the wire trap 52. Then, the latch detection sensor 53 detects that the wire 35 has been latched to the wire trap 52. For example, the latch detection sensor 53 may detect the contact between the latch member 37 and the trap body 55, or may detect the latched state between the wire 35 and the wire trap 52 through image recognition. The latch detection sensor 53 is connected to the control unit 60 and outputs the latched state between the wire 35 and the wire trap 52 to the control unit 60.

### (Unmanned Aerial Vehicle)

As shown in Figs. 1 and 2, the unmanned aerial vehicle 8 is an unmanned flying body (for example, a helicopter, a drone, or the like) as a rotorcraft. The unmanned aerial vehicle 8 need only be any flying body capable of forward, backward, and lateral movements, turning, and hovering. The unmanned aerial vehicle 8 constitutes a part of the recovery system 1. A plurality of unmanned aerial vehicles 8 are provided according to the number of wires 35. The plurality of unmanned aerial vehicles 8 are disposed on the vessel 5. The unmanned aerial vehicle 8 includes a control unit 80, a wire capture unit 85, and a capture detection sensor 90.

The control unit 80 includes, for example, an integrated circuit such as a central processing unit (CPU). The control unit 80 controls the flight of the unmanned aerial vehicle 8 or controls a capture operation of the wire 35 by the wire capture unit 85.

The wire capture unit 85 is a mechanism capable of executing the capture operation on the captured structural member 36 provided on the wire 35, and for example, an arm is used. The wire capture unit 85 captures the captured structural member 36, so that the towing movement of the wire 35 by the unmanned aerial vehicle 8 can be executed. Additionally, the wire capture unit 85 releases the captured structural member 36 from capture, so that the disengagement movement from the wire 35 by the unmanned aerial vehicle 8 can be executed.

The capture detection sensor 90 is a sensor that detects whether or not the wire 35 (the captured structural member 36) is captured by the wire capture unit 85. For example, the capture detection sensor 90 may detect the contact between the wire capture unit 85 and the captured structural member 36 or may detect the captured state between the wire capture unit 85 and the captured structural member 36 through image recognition. The capture detection sensor 90 is connected to the control unit 80 and outputs the captured state between the wire capture unit 85 and the captured structural member 36 to the control unit 80.

Next, a position control of the launch vehicle 3 and the vessel 5 during the landing of the launch vehicle 3 on the vessel 5 will be described with reference to Figs. 9 to 11. During the recovery of the launch vehicle 3 by the recovery system 1, the launch vehicle 3 and the vessel 5 are switched from a first position control to a second position control during the craft descent of the launch vehicle 3. The switching between the first position control and the second position control is executed based on the relative position measured by the altitude sensor 25. That is, the altitude at which the position control is switched from the first position control to the second position control during the craft descent is set as a first altitude threshold value H1. Therefore, the control unit 30 of the launch vehicle 3 and the control unit 60 of the vessel 5 switch the position control from the first position control to the second position control when the relative altitude detected by the altitude sensor 25 reaches the first altitude threshold value H1. The control unit 60 of the vessel 5 acquires the relative altitude of the altitude sensor 25 input from the launch vehicle 3 via the communication network 9.

In the first position control, the position of the launch vehicle 3 and the position of the vessel 5 are each controlled based on absolute coordinates in the earth coordinate system. In the launch vehicle 3, in the first position control, a predetermined region directly above the landing point is set as a target area, and the control unit 30 of the launch vehicle 3 executes the position control such that the launch vehicle 3 is positioned in the target area. In addition, in the vessel 5, in the first position control, a predetermined region over the ocean is set as a target area, and the control unit 60 of the vessel 5 executes the position control such that the vessel 5 is positioned in the target area.

The first position control will be specifically described with reference to Fig. 10. The first position control shown in Fig. 10 is executed in each of the launch vehicle 3 and the vessel 5. The control units 30 and 60 respectively acquire the current absolute coordinates of the launch vehicle 3 and the vessel in the earth coordinate system from the navigation devices 20 and 70 (step S11). Subsequently, the control units 30 and 60 each determine whether or not the acquired current absolute coordinates are in the target area set in the earth coordinate system (step S12). In a case where the acquired current absolute coordinates are not in the target area (step S12: No), the control units 30 and 60 correct the respective positions of the launch vehicle 3 and the vessel to be positioned in the target areas (step S13). In step S13, the control unit 30 of the launch vehicle 3 corrects the position by performing the craft control of the launch vehicle 3, and the control unit 60 of the vessel 5 corrects the position by performing the movement control of the vessel 5. After step S13 is executed, the control units 30 and 60 transition to step S11 again. In step S12, in a case where the acquired current absolute coordinates are in the target area (step S12: Yes), the control units 30 and 60 determine whether or not there is a position control switch (step S14). In step S14, the control units 30 and 60 determine whether or not there is a position control switch based on whether or not the relative altitude has reached the first altitude threshold value H1. When the control units 30 and 60 determine that there is a position control switch (step S14: Yes), the control units 30 and 60 end the execution of the first position control. On the other hand, when the control units 30 and 60 determine that there is no position control switch (step S14: No), the control units 30 and 60 transition to step S11 again.

In the second position control, the position of the launch vehicle 3 is controlled based on the relative position which is the relative position between the launch vehicle 3 and the landing point (on the vessel 5). Additionally, in the second position control, the craft operation of the launch vehicle 3 during landing is controlled based on the relative velocity which is the relative velocity between the launch vehicle 3 and the landing point (on the vessel 5). In the second position control, the position control is executed such that the relative position and the relative velocity reach target values.

The second position control will be specifically described with reference to Fig. 11. The second position control shown in Fig. 11 is executed in the launch vehicle 3. The control unit 30 acquires the relative position and the relative velocity from the navigation device 20 and the altitude sensor 25 (step S21). Subsequently, the control unit 30 determines whether or not the acquired relative position and relative velocity have reached the target values set in advance (step S22). In a case where the acquired relative position and relative velocity have not reached the target values (step S22: No), the control unit 30 corrects the position and the craft descent velocity of the launch vehicle 3 to reach the target values (step S23). In step S23, the control unit 30 of the launch vehicle 3 corrects the position and the craft descent velocity by executing the craft control and the thrust control of the launch vehicle 3. After step S23 is executed, the control unit 30 transitions to step S21 again. In step S22, in a case where the acquired relative position and relative velocity have reached the target values (step S22: Yes), the control unit 30 determines whether or not the launch vehicle 3 has landed (step S24). The landing of the launch vehicle 3 refers to a state in which the launch vehicle 3 is suspended on the recovery structure 50. For example, the determination of the landing of the launch vehicle 3 may be made based on whether or not the thrust of the launch vehicle 3 has stopped. In step S24, when the control unit 30 determines that the launch vehicle 3 has landed (step S24: Yes), the control unit 30 ends the execution of the second position control. On the other hand, when the control unit 30 determines that the launch vehicle 3 has not landed (step S24: No), the control unit 30 transitions to step S21 again.

### (Recovery Method)

Next, a recovery method of the launch vehicle 3 by the recovery system 1 will be described with reference to Figs. 12 to 15. First, in the recovery system 1, during the craft descent for landing, step S31 of causing the plurality of unmanned aerial vehicles 8 to take off after the plurality of wires 35 are ejected is executed. After that, in the recovery system 1, step S32 of capturing the plurality of ejected wires 35, using the plurality of unmanned aerial vehicles 8 that have taken off, is executed. Next, in the recovery system 1, step S33 of latching the plurality of captured wires 35 into the recovery structure 50, using the plurality of unmanned aerial vehicles 8, is executed. Subsequently, in the recovery system 1, step S34 of releasing the plurality of wires 35 from capture by the plurality of unmanned aerial vehicles 8 is executed. Then, in the recovery system 1, step S35 of suspending and supporting the launch vehicle 3 after the thrust of the launch vehicle 3 is stopped, using the recovery structure 50, is executed.

In step S31, when a second altitude threshold value H2, which is an altitude lower than the first altitude threshold value H1, is reached, the wire ejection unit 40 ejects the plurality of wires 35. Specifically, in step S31, when the altitude acquired by the altitude sensor 25 reaches the second altitude threshold value H2, the control unit 30 of the launch vehicle 3 controls the wire ejection unit 40 to eject the drag chute 41 of the wire ejection unit 40, thereby pulling out the wire 35 to the outside of the launch vehicle 3. The plurality of pulled-out wires 35 extend toward the outer side of the launch vehicle 3. After that, in step S31, when the altitude acquired by the altitude sensor 25 reaches a third altitude threshold value H3, which is an altitude lower than the second altitude threshold value H2, the control unit 30 of the launch vehicle 3 outputs altitude information indicating that the third altitude threshold value H3 is reached to the plurality of unmanned aerial vehicles 8. When the plurality of unmanned aerial vehicles 8 acquire the altitude information indicating that the third altitude threshold value H3 is reached, the plurality of unmanned aerial vehicles 8 take off from the vessel 5.

In step S32, the plurality of unmanned aerial vehicles 8 that have taken off from the vessel 5 capture the plurality of ejected wires 35. Specifically, in step S32, the unmanned aerial vehicle 8 flies toward the captured structural member 36 provided on the wire 35. In this case, the unmanned aerial vehicle 8 recognizes the captured structural member 36 by performing image recognition of an image captured by a camera (not shown) and flies toward the captured structural member 36. In addition, the unmanned aerial vehicle 8 is configured to identify the captured structural member 36 and flies toward a predetermined captured structural member 36 associated with the unmanned aerial vehicle 8. The identification of the captured structural member 36 by the unmanned aerial vehicle 8 can be performed, for example, by providing a small transponder on the captured structural member 36. The plurality of unmanned aerial vehicles 8 execute capture operations with the wire capture unit 85 while performing collision avoidance operations, thereby capturing the predetermined captured structural members 36 associated therewith.

As shown in Fig. 13, in step S32, after the unmanned aerial vehicle 8 executes the capture operation, the unmanned aerial vehicle 8 detects whether or not the captured structural member 36 is captured using the capture detection sensor 90. The unmanned aerial vehicle 8 outputs a capture success signal D1, which is information indicating that capture has been successful, to the control unit 60 of the vessel 5 via the communication network 9 when the capture detection sensor 90 detects that capture has been performed. Additionally, the unmanned aerial vehicle 8 outputs a capture failure signal D2, which is information indicating that capture has failed, to the control unit 60 of the vessel 5 via the communication network 9 when the capture detection sensor 90 detects that capture has not been performed. The control unit 60 of the vessel 5 executes position correction such that the support load of the launch vehicle 3 with respect to the recovery structure 50 is balanced, based on the dispositions of the unmanned aerial vehicles 8 detected as having performed capture, and outputs a position correction signal D3 to the unmanned aerial vehicles 8 such that the unmanned aerial vehicles 8 are positioned in accordance with the position-corrected dispositions. In Fig. 13, an unmanned aerial vehicle 8a where capture has been successful moves to a position of an unmanned aerial vehicle 8b where capture has failed. The position may be corrected such that the intervals between the unmanned aerial vehicles 8a where capture has been successful are equal. That is, the position correction is not particularly limited as long as the support load of the launch vehicle 3 with respect to the recovery structure 50 is balanced.

In step S33, the unmanned aerial vehicle 8 that has captured the wire 35 moves to latch the wire 35 into the recovery structure 50. Specifically, in step S33, when the altitude acquired by the altitude sensor 25 reaches a fourth altitude threshold value H4, which is an altitude lower than the third altitude threshold value H3, the control unit 30 of the launch vehicle 3 outputs altitude information indicating that the fourth altitude threshold value H4 is reached to the plurality of unmanned aerial vehicles 8. When the plurality of unmanned aerial vehicles 8 acquire the altitude information indicating that the fourth altitude threshold value H4 is reached, the plurality of unmanned aerial vehicles 8 are deployed to the outer side of the annular portion 51a of the recovery structure 50 and then move to positions below the annular portion 51a. Through this movement, the plurality of unmanned aerial vehicles 8 accommodate the wires 35 into the accommodation spaces between the trap bodies 55 and latch the wires 35 to the wire traps 52 using the latch members 37.

In step S34, the plurality of unmanned aerial vehicles 8 release the plurality of captured wires 35 from capture. Specifically, in step S34, the vessel 5 detects whether or not the latch member 37 has latched onto the wire trap 52 using the latch detection sensor 53. When the latch detection sensor 53 detects that the latch has been performed, the vessel 5 outputs latch success information, which is information indicating that the latch has been successful, to the unmanned aerial vehicle 8 via the communication network 9. When the latch success information is input, the unmanned aerial vehicle 8 releases the wire 35 from capture by the wire capture unit 85 and moves away from the recovery structure 50.

In step S35, the thrust of the launch vehicle 3 is stopped, so that the launch vehicle 3 is supported in a suspended state on the recovery structure 50 via the wires 35. When step S35 is executed, the recovery method of the launch vehicle 3 using the recovery system 1 ends.

### [Embodiment 2]

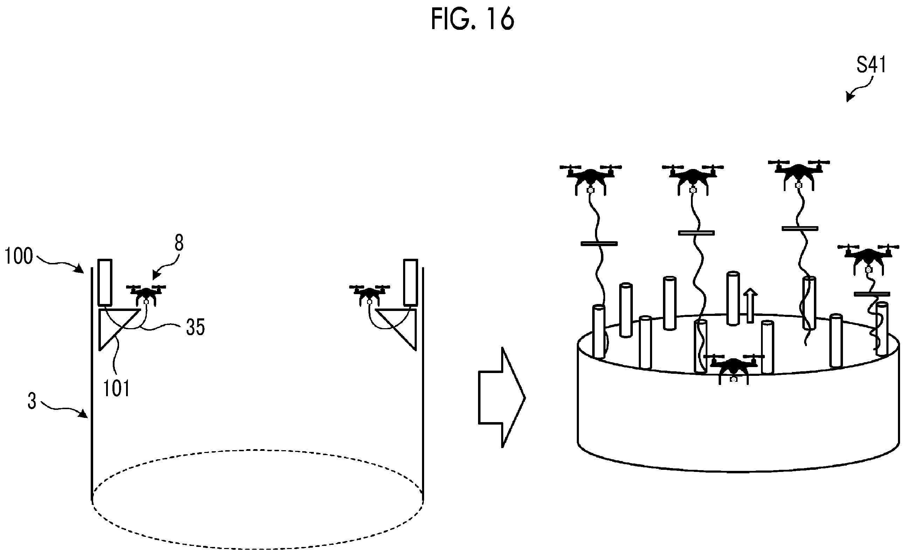

Next, Embodiment 2 will be described with reference to Fig. 16. Note that, in Embodiment 2, in order to avoid duplicate descriptions, portions that are different from those in Embodiment 1 will be described, and portions having the same configuration as those in Embodiment 1 will be denoted with the same reference numerals for description. Fig. 16 is an explanatory view regarding an operation of a recovery system according to Embodiment 2.

A recovery system 100 of Embodiment 2 is disposed on an inner side of the launch vehicle 3 in a state in which the plurality of unmanned aerial vehicles 8 have captured the wires 35. That is, the recovery system 100 is provided with a UAV platform 101 that is provided on the inner side of the launch vehicle 3 and on which the plurality of unmanned aerial vehicles 8 are installed.

In a recovery method of the launch vehicle 3 using the recovery system 100 of Embodiment 2, when the altitude reaches the second altitude threshold value H2, step S41 of causing the plurality of unmanned aerial vehicles 8 to fly toward the outer side of the launch vehicle 3 is executed. That is, in the recovery method, step S41 is executed instead of step S31 of Embodiment 1. In addition, in the recovery method, the execution of step S32 of Embodiment 1 is omitted, and step S33 and subsequent steps are the same as those in Embodiment 1.

As described above, the recovery system and the recovery method described in Embodiments 1 and 2 are understood as follows, for example.

According to a first aspect, there is provided a recovery system 1 that recovers a spacecraft (launch vehicle 3) whose craft descends while thrust is generated during landing, the recovery system 1 including: a plurality of cable-like members (wires 35) connected to the craft and extending toward an outer side of the craft during craft descent; a plurality of unmanned aerial vehicles 8 respectively capturing the cable-like members while flying; and a recovery structure 50 into which the plurality of captured cable-like members that have been released by the unmanned aerial vehicles 8 are latched, thereby supporting the spacecraft in a suspended state, the recovery structure 50 being provided at a landing point of the spacecraft, in which the steps are executed: step S33 of latching the plurality of captured cable-like members into the recovery structure 50 during the craft descent, using the plurality of unmanned aerial vehicles 8; step S34 of releasing the cable-like members from capture, using the plurality of unmanned aerial vehicles 8; and step S35 of suspending and supporting the spacecraft after the thrust of the spacecraft is stopped, using the recovery structure 50.

With this configuration, since no legs and deployment mechanisms, as in the related art, are provided in the spacecraft, it is possible to suppress a decrease in capabilities of the spacecraft. Additionally, since the spacecraft can be latched into the recovery structure 50 via the cable-like members near the landing, the landing attitude of the spacecraft can be stabilized, making it possible to land safely.

As a second aspect, in the recovery system 1 according to the first aspect, an ejection unit (wire ejection unit 40) that ejects the plurality of cable-like members toward an outside of the craft during the craft descent is further provided, the plurality of unmanned aerial vehicles 8 are disposed outside the spacecraft, and step S32 of capturing the plurality of cable-like members ejected by the ejection unit during the craft descent, using the plurality of unmanned aerial vehicles 8, is further executed.

With this configuration, since the plurality of cable-like members can be ejected from the ejection unit, the cable-like members can be appropriately deployed to the outer side of the craft, thereby enabling effective capture by the plurality of unmanned aerial vehicles 8.

As a third aspect, in the recovery system 1 according to the second aspect, the ejection unit includes a drag chute 41, a parachute, or a balloon disposed at an outer end portion of the cable-like member.

With this configuration, since the tension can be applied to the plurality of cable-like members ejected to the outer side of the craft, the cable-like members can be brought into a stable state, thereby enabling more effective capture by the plurality of unmanned aerial vehicles 8.

As a fourth aspect, in the recovery system 1 according to the second aspect, a position control for landing the spacecraft at a predetermined landing point includes a first position control of controlling a position of the spacecraft based on absolute coordinates in an earth coordinate system, and a second position control of controlling the position of the spacecraft based on a relative position which is a relative position between the spacecraft and the landing point, an altitude at which the position control is switched from the first position control to the second position control during the craft descent is set as a first altitude threshold value H1, and the ejection unit ejects the plurality of cable-like members when a second altitude threshold value H2, which is an altitude lower than the first altitude threshold value, is reached.

With this configuration, since the timing of ejecting the plurality of cable-like members can be set to an appropriate timing, an appropriate time required for the unmanned aerial vehicles 8 to capture the cable-like members can be ensured.

As a fifth aspect, in the recovery system 1 according to the fourth aspect, the spacecraft includes an altimeter (altitude sensor 25) that measures an altitude, and outputs the altitude measured by the altimeter to the plurality of unmanned aerial vehicles 8.

With this configuration, since the unmanned aerial vehicles 8 can execute operations based on the altitude of the spacecraft, coordinated operations with the spacecraft can be executed.

As a sixth aspect, in the recovery system 1 according to the second aspect, a latch detection sensor 53 that detects latching of the cable-like member into the recovery structure 50 is further provided, and the unmanned aerial vehicle 8 releases the cable-like member from capture when the latching of the cable-like member into the recovery structure 50 is detected by the latch detection sensor 53.

With this configuration, since the release from capture by the unmanned aerial vehicles 8 can be executed after detecting the latching of the cable-like members into the recovery structure 50, the reliability of the latching of the cable-like members into the recovery structure 50 can be enhanced.

As a seventh aspect, in the recovery system 1 according to any one of the first to sixth aspects, a capture detection sensor 90 that detects whether or not the cable-like member is captured by the unmanned aerial vehicle 8 is further provided, and a plurality of the unmanned aerial vehicles 8 detected by the capture detection sensor 90 as having performed capture are position-corrected such that a support load of the spacecraft with respect to the recovery structure 50 is balanced, and latch the cable-like members into the recovery structure 50.

With this configuration, the imbalance of the support load of the spacecraft with respect to the recovery structure 50 can be suppressed.

As an eighth aspect, in the recovery system 1 according to the first aspect, the plurality of unmanned aerial vehicles 8 are disposed on an inner side of the spacecraft in a state in which the cable-like members are captured, and step S41 of causing the plurality of unmanned aerial vehicles 8 to fly toward an outer side of the spacecraft during the craft descent is further executed.

With this configuration, since there is no need to execute capture of the cable-like member by the unmanned aerial vehicle 8, the operation related to the recovery of the spacecraft can be simplified.

According to a ninth aspect, there is provided a recovery method executed by a recovery system 1 that recovers a spacecraft (launch vehicle 3) whose craft descends while thrust is generated during landing, the recovery system 1 including a plurality of cable-like members (wires 35) connected to the craft and extending toward an outer side of the craft during craft descent, a plurality of unmanned aerial vehicles 8 respectively capturing the cable-like members while flying, and a recovery structure 50 into which the plurality of captured cable-like members that have been released by the unmanned aerial vehicles 8 are latched, thereby supporting the spacecraft in a suspended state, the recovery structure 50 being provided at a landing point of the spacecraft, the recovery method including: step S33 of latching the plurality of captured cable-like members into the recovery structure 50 during the craft descent, using the plurality of unmanned aerial vehicles 8; step S34 of releasing the cable-like members from capture, using the plurality of unmanned aerial vehicles 8; and step S35 of suspending and supporting the spacecraft after the thrust of the spacecraft is stopped, using the recovery structure 50.

With this configuration, since no legs and deployment mechanisms, as in the related art, are provided in the spacecraft, it is possible to suppress a decrease in capabilities of the spacecraft. Additionally, since the spacecraft can be latched into the recovery structure 50 via the cable-like members near the landing, the landing attitude of the spacecraft can be stabilized, making it possible to land safely.

### Reference Signs List

1: recovery system
3: launch vehicle
5: vessel
8: unmanned aerial vehicle
9: communication network
20: navigation device
25: altitude sensor
30: control unit (launch vehicle)
35: wire
36: captured structural member
37: latch member
40: wire ejection unit
41: drag chute
50: recovery structure
51: main structure
52: wire trap
53: latch detection sensor
55: trap body
56: movable door
57: spring-loaded hinge
60: control unit (vessel)
70: navigation device
80: control unit (unmanned aerial vehicle)
85: wire capture unit
90: capture detection sensor
100: recovery system (Embodiment 2)
101: UAV platform

## Claims

1. A recovery system that recovers a spacecraft whose craft descends while thrust is generated during landing, the recovery system comprising:
a plurality of cable-like members connected to the craft and extending toward an outer side of the craft during craft descent;
a plurality of unmanned aerial vehicles respectively capturing the cable-like members while flying; and
a recovery structure into which the plurality of captured cable-like members are latched and released by the unmanned aerial vehicles, thereby supporting the spacecraft in a suspended state, the recovery structure being provided at a landing point of the spacecraft,
wherein the steps are executed:
a step of latching the plurality of captured cable-like members into the recovery structure during the craft descent, using the plurality of unmanned aerial vehicles;
a step of releasing the cable-like members from capture, using the plurality of unmanned aerial vehicles; and
a step of suspending and supporting the spacecraft after the thrust of the spacecraft is stopped, using the recovery structure.

2. The recovery system according to Claim 1, further comprising:
an ejection unit that ejects the plurality of cable-like members toward an outside of the craft during the craft descent,
wherein the plurality of unmanned aerial vehicles are disposed outside the spacecraft, and
a step of capturing the plurality of cable-like members ejected by the ejection unit during the craft descent, using the plurality of unmanned aerial vehicles, is further executed.

3. The recovery system according to Claim 2,
wherein the ejection unit includes a drag chute, a parachute, or a balloon disposed at an outer end portion of the cable-like member.

4. The recovery system according to Claim 2,
wherein a position control for landing the spacecraft at a predetermined landing point includes a first position control of controlling a position of the spacecraft based on absolute coordinates in an earth coordinate system, and a second position control of controlling the position of the spacecraft based on a relative position which is a relative position between the spacecraft and the landing point,
an altitude at which the position control is switched from the first position control to the second position control during the craft descent is set as a first altitude threshold value, and
the ejection unit ejects the plurality of cable-like members when a second altitude threshold value, which is an altitude lower than the first altitude threshold value, is reached.

5. The recovery system according to Claim 4,
wherein the spacecraft includes an altimeter that measures an altitude, and outputs the altitude measured by the altimeter to the plurality of unmanned aerial vehicles.

6. The recovery system according to Claim 2, further comprising:
a latch detection sensor that detects latching of the cable-like member into the recovery structure,
wherein the unmanned aerial vehicle releases the cable-like member from capture when the latching of the cable-like member into the recovery structure is detected by the latch detection sensor.

7. The recovery system according to Claim 1, further comprising:
a capture detection sensor that detects whether or not the cable-like member is captured by the unmanned aerial vehicle,
wherein a plurality of the unmanned aerial vehicles detected by the capture detection sensor as having performed capture are position-corrected such that a support load of the spacecraft with respect to the recovery structure is balanced, and latch the cable-like members into the recovery structure.

8. The recovery system according to Claim 1,
wherein the plurality of unmanned aerial vehicles are disposed on an inner side of the spacecraft in a state in which the cable-like members are captured, and
a step of causing the plurality of unmanned aerial vehicles to fly toward an outer side of the spacecraft during the craft descent is further executed.

9. A recovery method executed by a recovery system that recovers a spacecraft whose craft descends while thrust is generated during landing, the recovery system including a plurality of cable-like members connected to the craft and extending toward an outer side of the craft during craft descent, a plurality of unmanned aerial vehicles respectively capturing the cable-like members while flying, and a recovery structure into which the plurality of captured cable-like members are latched and released by the unmanned aerial vehicles, thereby supporting the spacecraft in a suspended state, the recovery structure being provided at a landing point of the spacecraft, the recovery method comprising:
a step of latching the plurality of captured cable-like members into the recovery structure during the craft descent, using the plurality of unmanned aerial vehicles;
a step of releasing the cable-like members from capture, using the plurality of unmanned aerial vehicles; and
a step of suspending and supporting the spacecraft after the thrust of the spacecraft is stopped, using the recovery structure.
